# DEMANDE DE BREVET EUROPEEN

(11) **EP 4 837 987 A1**
(43) Date de publication de la demande: **11.11.2026**
(21) Numéro de dépôt: 25175484.2
(22) Date de dépôt: 09.05.2025
(51) Int. Cl.: C22C 5/02, B32B 15/01, B32B 33/00, C22C 9/00, C22C 9/02, C22C 9/04, C22C 9/06, C22F 1/08, C22F 1/14, G04B 45/00, G04B 19/12

(54) **ARTICLE AVEC UN GRADIENT DE COULEURS ET SON PROCÉDÉ DE FABRICATION**

(71) Demandeur: The Swatch Group Research and Development Ltd, 2074 Marin (CH)
(72) Inventeur: CLERC, Steve, 2000 Neuchâtel (CH); WINKLER, Yves, 3185 Schmitten (CH)
(74) Mandataire: ICB SA

(57) **Abrégé**

L'invention se rapporte à un procédé de fabrication d'un article (1) présentant sur au moins une partie d'une face (7) destinée à être visible en utilisation et sur une profondeur d'au moins 100 µm en dessous de ladite face (7) un gradient de couleurs (1a, 1b, 1c, 1d), ledit procédé comprenant les étapes successives de :
- Superposition de plusieurs ébauches (2a, 2b, 2c, 2d) réalisées respectivement dans des alliages métalliques se distinguant par leur composition chimique et leur couleur,
- Traitement thermique de diffusion de l'empilement des ébauches (2a, 2b, 2c, 2d),
- Usinage de la face extérieure (10) de l'empilement cohésif (3) pour former au moins une surface inclinée par rapport au plan de la face extérieure (10), la surface inclinée s'étendant sur une profondeur au moins supérieure à l'épaisseur d'une ébauche pour révéler en tout ou partie le gradient de couleurs.

## Description

### Domaine technique de l'invention

La présente invention se rapporte à un article, en particulier à un article en or massif, présentant un gradient de couleurs et à son procédé de fabrication.

### Arrière-plan technologique

Il existe différentes manières d'obtenir des gradients de couleurs pour un matériau métallique, principalement en utilisant des poudres ou des couches minces déposées par exemple par PVD (physical vapor deposition). Le procédé avec des poudres nécessite de faire des mélanges pour obtenir les différentes couleurs voulues tandis que le procédé PVD se limite au dépôt de couches sans possibilité de réaliser en volume un produit avec un gradient de couleurs.

Il est également envisageable de réaliser un gradient de couleurs en utilisant des couches d'alliages de couleurs proches, en les soudant ensemble, puis en faisant une coupe perpendiculaire à ces couches. La difficulté est cependant d'avoir une transition graduelle de couleurs entre ces couches. Une diffusion par traitement thermique va adoucir la transition entre les couches mais sur une faible distance de l'ordre de quelques dizaines de microns. En effet, la distance de diffusion est fonction de la racine carrée du temps de traitement thermique. Cela, combiné aux faibles vitesses de diffusion, rend l'obtention d'une zone macroscopique de transition de l'ordre du millimètre très lente. La transition entre les couleurs ne sera donc pas graduelle à moins d'utiliser un traitement thermique extrêmement long, ce qui est irréaliste d'un point de vue industriel. Un remède à cette problématique serait d'utiliser un nombre plus élevé de couches d'alliages, ayant des couleurs plus proches afin de diminuer le contraste entre deux couches. Cependant, cette méthode complique singulièrement la réalisation car elle nécessite la création de nombreux alliages de différentes compositions.

### Résumé de l'invention

L'invention vise à proposer un nouveau procédé pour fabriquer un article présentant sur au moins une partie de sa surface extérieure et sur au moins une profondeur de 100 µm un gradient de couleurs avec une transition graduelle entre les couleurs et ce sans recourir à des poudres, au procédé PVD ou à un procédé trop long.

Le procédé selon l'invention consiste à obtenir un gradient de couleurs partant d'un empilement de couches avec une zone de diffusion limitée entre les couches puis à agrandir géométriquement la zone de diffusion sur le produit fini. Plus précisément, l'empilement de couches est soumis à un traitement thermique de durée raisonnable pour obtenir une zone de diffusion de quelques dizaines ou centaines de microns entre les couches. Ensuite, l'empilement est soumis à un usinage local ou sur toute la surface de base de l'empilement pour former une surface inclinée par rapport au plan de ladite surface de base de manière à traverser l'empilement de couches et ainsi révéler le gradient de couleurs.

Plus spécifiquement, l'invention se rapporte à un procédé de fabrication d'un article présentant sur au moins une partie d'une face destinée à être visible en utilisation et sur une profondeur d'au moins 100 µm en dessous de ladite face un gradient de couleurs, ledit procédé comprenant les étapes successives de :
- Mise à disposition de plusieurs ébauches réalisées respectivement dans des alliages métalliques se distinguant par leur composition chimique et leur couleur,
- Superposition desdites ébauches pour former un empilement, ledit empilement étant défini avec une face extérieure,
le procédé comprenant ensuite les étapes successives ou concomitantes de :
- Mise sous contrainte à température ambiante ou à chaud dudit empilement pour former un empilement cohésif ayant une épaisseur E supérieure ou égale à 100 µm,
- Traitement thermique de diffusion entre les ébauches dudit empilement cohésif,
suivies d'une étape d':
- Usinage de la face extérieure de l'empilement cohésif pour former au moins une surface inclinée par rapport au plan de la face extérieure, la surface inclinée s'étendant sur une profondeur au moins supérieure à l'épaisseur d'une ébauche par rapport à la face extérieure afin de révéler le gradient de couleurs sur la face,
le procédé comprenant ensuite une étape optionnelle de :
- Finition de l'état de surface de la face pour obtenir l'article.

L'article obtenu a un gradient de couleurs présent sur une profondeur qui est au moins de 100 µm, ce qui permet de garantir sa visibilité dans le temps indépendamment de l'usure et des chocs subis, contrairement à un gradient de couleurs obtenu par PVD où le gradient de couleurs est limité à une épaisseur inférieure à 20 µm. Le gradient de couleurs peut également être présent dans tout le volume de l'article ; la profondeur étant aisément contrôlée en sélectionnant l'épaisseur respective des couches de l'empilement.

Ce procédé permet d'une manière simple d'obtenir une variation graduelle des couleurs entre couches avec un temps de traitement thermique de diffusion raisonnable. Typiquement, le temps de traitement thermique est compris entre 1 heure et 6 heures pour des alliages d'or avec pour résultat une zone de diffusion de l'ordre de 100-150 µm qui sera étalée sur la face visible sur une distance entre 2 et 50 fois supérieures grâce à l'usinage selon un angle donné par rapport à la surface de base.

L'invention se rapporte également à l'article avec un gradient de couleurs visible sur au moins une partie d'une face de l'article et s'étendant sur une profondeur d'au moins 100 µm en dessous de ladite face, ledit gradient de couleurs étant formé d'un ensemble de couches réalisées respectivement dans des alliages métalliques se distinguant par leur composition chimique et leur couleur, l'ensemble des couches présentant une zone de diffusion mesurable, par exemple par EDX, entre chaque couche afin d'obtenir une variation graduelle de la couleur sur l'ensemble des couches.

### Brève description des figures

La figure 1 représente schématiquement les étapes successives a) à e) du procédé de fabrication selon l'invention.
La figure 2 représente une variante de l'étape d) du procédé de la figure 1.
La figure 3 représente la mesure par EDX de l'évolution de la concentration en Cu et en Ag entre deux couches d'or 2N et 5N à l'issue de l'étape c).
La figure 4 représente schématiquement la zone de diffusion entre les couches suite à l'étape c) et son agrandissement géométrique suite à l'étape d).
La figure 5 représente schématiquement la distance D2 de la zone de diffusion entre deux couches dans la profondeur de l'article fini et la distance D1 de la zone de diffusion entre ces deux mêmes couches sur la face visible de l'article fini pour la configuration avec des creusures sur la face visible et pour la configuration avec un plan incliné sur la face visible.
Les figures 6 et 7 représentent schématiquement les différences de ratio entre D1 et D2 en fonction de l'angle α de la surface inclinée par rapport à la surface de base et en fonction du temps de traitement thermique de diffusion pour un système d'alliage donné.

### Description détaillée de l'invention

La présente invention se rapporte à un procédé de fabrication d'un article présentant un gradient de couleurs destiné à être visible en utilisation. Le procédé est particulièrement adapté pour réaliser un article présentant majoritairement une surface plane visible en utilisation. Ainsi, le procédé est particulièrement adapté pour réaliser un composant horloger tel qu'un cadran, un fond, une masse oscillante, un pont ou une lunette.

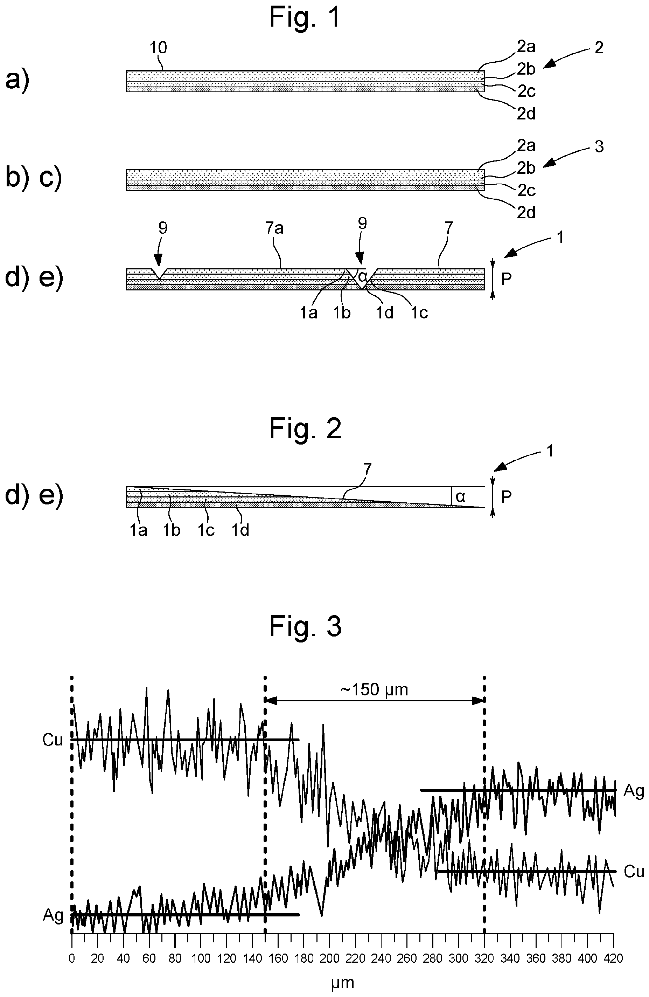

La présente invention se rapporte également à l'article 1 présentant ce gradient de couleurs 1a, 1b, 1c, 1d visible à la figure 1 d) e) dans des creusures 9 ménagées sur la face visible 7 de l'article ou à la figure 2 dans le plan de la face visible 7. Selon l'invention, ce gradient de couleurs visible en surface est également présent sur une profondeur d'au moins 100 µm avec une profondeur qui peut s'étendre sur toute l'épaisseur de l'article.

L'article est réalisé avec des alliages métalliques. Plus spécifiquement, il peut s'agir d'un article massif en alliage d'or avec éventuellement de l'or pur également, comprenant au moins deux nuances de couleurs différentes. Par exemple, l'article peut être réalisé avec au moins deux nuances classifiées entre 2N et 6N selon la classification établie par les normes de l'industrie horlogère suisse (NIHS). Ces nuances entre 2N et 6N ont une teneur croissante en cuivre donnant une couleur de plus en plus rouge. Elles peuvent également comprendre d'autres éléments tels que l'Ag. Par exemple, l'article peut comporter au moins deux nuances choisies parmi les nuances de couleurs, graduelles ou non, suivantes : Or 24K (or pur), Or 18K 2N, Or 18K 3N, Or 18K 4N, Or 18K 5N, Or 18K 6N. Avantageusement, l'article peut être réalisé à partir de quatre nuances qui sont graduellement les suivantes : Or 24K (or pur), Or 18K 2N, Or 18K 4N, Or 18K 6N. Des empilements alternatifs de nuances d'or sont également envisageables tels que 2N-6N-2N-6N.

De manière générale, le gradient de couleurs peut être réalisé avec tout alliage métallique pour autant que des variations de compositions autour d'une composition de base permettent de moduler la couleur graduellement et non de manière discrète. Il ne peut être exclu de travailler avec des alliages ayant des compositions de base différentes pour autant qu'on retrouve cette variation graduelle de couleurs entre les différentes compositions après fabrication de l'article. Le gradient de couleurs comporte au moins deux nuances de couleurs avec 2, 3, 4, 5, 6, 7, 8, etc, nuances de couleurs.

Plus spécifiquement, l'article peut également être réalisé avec des alliages d'un métal non précieux tel que le Cu/Cu-Sn, Cu/Cu-Ni, Cu/Cu-As, Cu/Cu-Sb, Cu/Cu-Zn avec des variations de la composition donnant la variation graduelle de la couleur. Par exemple, pour le Cu/Cu-Sn, il peut s'agir de déclinaisons de compositions entre le Cu pur et le Cu avec 11% en poids de Sn. Par exemple, pour le Cu/Cu-Ni, il peut s'agir de variations de compositions entre le Cu pur et le Cu avec 7,9% en poids de Ni. Par exemple, pour le Cu/Cu-As, il peut s'agir de déclinaisons de compositions entre le Cu pur et le Cu avec 15% d'As en poids. Par exemple, pour le Cu/Cu-Sb, il peut s'agir de déclinaisons de compositions entre le Cu pur et le Cu avec 7,3% en poids de Sb. Pour l'alliage de Cu/Cu-Zn, un gradient a été observé à des taux de Zn intermédiaires, avec un pourcentage de Zn compris entre environ 45% et environ 48% en poids pour passer du jaune pâle à un jaune plus foncé. De manière générale, il est simplement important d'avoir un changement de couleur continu avec la composition afin d'obtenir un gradient et non pas un saut discret.

Le procédé de fabrication avec ses étapes a) à e) est schématisé à la figure 1. Dans une première étape a), les ébauches 2a, 2b, 2c, 2d réalisées avec des variations de composition d'un alliage métallique sont mises à disposition et superposées pour former un empilement 2 défini avec une face extérieure 10, aussi dite surface de base de l'empilement. Dans l'exemple, quatre ébauches 2a, 2b, 2c, 2d, aussi dites couches ci-après, sont superposées pour former l'empilement 2. La variation de couleur peut être graduelle le long de l'épaisseur des couches superposées avec des couleurs s'intensifiant ou l'inverse le long de l'épaisseur. Il est également envisageable de superposer un premier ensemble de couches avec une variation graduelle de couleurs sur un deuxième ensemble de couches ayant une variation graduelle de couleurs, la variation graduelle de couleurs pouvant pour chaque ensemble allant en s'intensifiant ou s'éclaircissant ou pouvant pour un ensemble s'intensifier et l'inverse pour l'autre ensemble. Il est aussi envisageable d'alterner des couches avec des intensités variables comme par exemple : 4N-3N-5N-2N ou 2N-3N-2N-5N dans le cas de l'or et ses alliages. Il est aussi envisageable dans un empilement avec au moins trois couches de mettre deux couches de même composition avec une ou plusieurs autres couches entre.

Le nombre de couches, leurs épaisseurs respectives, les alliages en question ainsi que leurs géométries sont choisis en fonction du résultat et de l'application. Par exemple, les ébauches peuvent être sous forme de rondelles pour former un article circulaire. On comprendra que toute géométrie (carrée, rectangulaire, annulaire, etc.) peut être envisagée. Les ébauches peuvent par exemple être sous forme de bandes. Les ébauches peuvent préalablement être polies ou soumises à un autre traitement de surface tel que par exemple une attaque chimique, pour améliorer l'interface entre les ébauches.

Selon le procédé, l'épaisseur de chaque couche n'est pas un facteur limitatif. Elle peut être variable d'une couche à une autre pour autant que l'ensemble des couches ait une épaisseur supérieure ou égale à 100 µm. Chaque couche peut avoir une épaisseur comprise entre quelques microns, voire dizaines de microns et plusieurs millimètres voire plus. Par exemple, dans le cas d'un cadran ou d'un fond, l'épaisseur totale de l'empilement est comprise 0,2 mm et 4 mm avec pour chaque couche une épaisseur comprise entre 0,05 mm et 2 mm. Il est envisageable d'avoir une couche beaucoup plus épaisse, par exemple la couche 2d qui délimitera la face opposée à la face visible. A titre d'exemple, la dernière couche 2d peut avoir une épaisseur de 10-15 mm avec les couches supérieures d'une épaisseur de l'ordre de plusieurs dizaines de microns. Une application serait pour un cadran avec une moitié inférieure de l'épaisseur du cadran formée d'une couche et avec une moitié supérieure formée de plusieurs couches formant ainsi le gradient de couleurs seulement sur une moitié de l'épaisseur du cadran.

Dans une deuxième étape b), l'ensemble des couches superposées est soumis à une mise sous contrainte de préférence à chaud pour souder les couches 2a, 2b, 2c, 2d entre elles et ainsi former un empilement cohésif 3. Différentes techniques de consolidation sont envisageables. On peut citer le frittage flash (SPS pour Spark Plasma Sintering), le colaminage, la coextrusion, le soudage par ultrasons avec une contrainte appliquée par une presse, le soudage par effet joule avec une contrainte appliquée par une presse, etc. Par exemple, les ébauches sous formes de bandes à l'étape a) peuvent être colaminées. Ce colaminage pourrait être suivi d'une mise à dimension, par exemple, par étampage de l'empilement consolidé pour obtenir la forme voulue, par exemple circulaire.

La pression et la température sont fonction des alliages métalliques et de la géométrie de l'ébauche. Typiquement pour un ensemble de couches à base d'alliage d'or et éventuellement d'or pur, la température est comprise entre la température ambiante et 890°C, de préférence entre 350°C et 870°C et plus préférentiellement entre 400°C et 650°C avec une pression comprise entre 1 MPa et 1000 MPa, de préférence entre 5 MPa et 350 MPa, plus préférentiellement entre 50 MPa et 250 MPa. Le temps d'application de la contrainte peut être compris entre 10 secondes et 48 heures, de préférence entre 5 minutes et 2 heures, plus préférentiellement entre 10 minutes et 1 heure. Cette étape peut être réalisée sous atmosphère inerte ou sous atmosphère contrôlée afin d'améliorer les résultats selon les alliages.

Dans une troisième étape c), un traitement thermique est effectué pour réaliser une diffusion chimique entre les couches 2a, 2b, 2c, 2d permettant d'avoir un gradient de couleurs entre les couches à la place d'une ligne de séparation discrète. De nouveau, la température du traitement thermique sera fonction du matériau. Par exemple, pour un ensemble de couches à base d'alliage d'or et éventuellement d'or pur, la température est comprise entre 700°C et 890°C. Le temps de traitement peut être compris entre 1 minute et plusieurs dizaines d'heures, le temps maximal ayant pour seule limite la rentabilité. Ainsi, de préférence, le temps de traitement est optimalement compris entre 1 heure et 8 heures et plus préférentiellement entre 1 heure et 6 heures. De manière générale, indépendamment du type d'alliage, la température et le temps de traitement sont adaptés pour une obtenir une distance de diffusion entre deux couches comprises entre 10 µm et 400 µm, de préférence entre 100 µm et 250 µm. On précisera que ce traitement thermique peut également être utilisé, selon les alliages, pour obtenir des propriétés particulières, par exemple, un durcissement. Ce traitement thermique pourrait également être accompagné d'une trempe ou réalisé sous atmosphère spécifique selon besoin. Selon une variante du procédé, on notera que les étapes b) et c) peuvent être réalisées en une seule étape. On parlera alors d'étapes concomitantes.

Dans une quatrième étape d), la face extérieure 10 de l'empilement 3 est usinée soit localement via par exemple un meulage, une ablation laser ou un fraisage, soit sur toute la face extérieure afin de former une surface inclinée par rapport au plan de la face supérieure 10. De préférence, la surface inclinée est plane et inclinée selon un angle α par rapport au plan de la face supérieure 10, l'angle α étant compris entre 0,1° et 40°, de préférence 0,5° à 20°, plus préférentiellement entre 1° et 10°. Il est également envisageable que la surface inclinée soit bombée par exemple pour réaliser un cadran bombé. Cette surface inclinée s'étend depuis la face supérieure 10 sur une profondeur supérieure à l'épaisseur d'au moins une couche de l'empilement de manière à révéler au moins en partie le gradient de couleurs. De préférence, la surface inclinée s'étend à travers toute l'épaisseur P de l'empilement. Ainsi, dans l'exemple de la figure 2, la surface inclinée forme un plan incliné qui traverse toutes les couches 1a, 1b, 1c, 1d de l'empilement. Dans l'exemple de la figure 1 d) e), la surface inclinée forme des creusures 9 s'étendant partiellement ou totalement sur l'épaisseur de l'empilement. A gauche de la figure 1 d) e), la creusure 9 s'étend sur une profondeur P correspondant à l'épaisseur de deux couches 1a, 1b. A la droite de la figure 1 d) e), la creusure 9 s'étend sur une profondeur P correspondant à l'épaisseur de quatre couches 1a, 1b, 1c, 1d. La surface finale 7 de l'article n'est alors plus complètement plane. Elle est formée d'une partie plane 7a avec une couleur qui correspond à la couleur de la couche au niveau de la face extérieure de l'empilement et d'une autre partie avec une ou plusieurs creusures 9 où apparait le gradient de couleurs. Ces creusures présentent une surface inclinée par exemple en V. Selon une autre variante non représentée, la face 7 peut former un plan incliné révélant le gradient de couleurs avec en outre au moins une creusure ménagée sur la face 7 pour révéler le gradient de couleurs selon un autre angle.

Il y a ensuite une cinquième étape e) optionnelle de finition de surface de polissage, microbillage, sablage, satinage et/ou soleillage, etc. réalisée par exemple mécaniquement ou par laser. Il peut également s'agir d'une d'attaque chimique ou électrochimique pour créer des effets particuliers.

L'article 1 ainsi obtenu présente sur sa face 7 le gradient de couleurs visible dans le plan incliné et/ou dans les creusures.

On notera que des étapes de traitements thermiques supplémentaires peuvent également être réalisées à différents moments du procédé afin d'optimiser les propriétés mécaniques ou esthétiques de l'article obtenu.

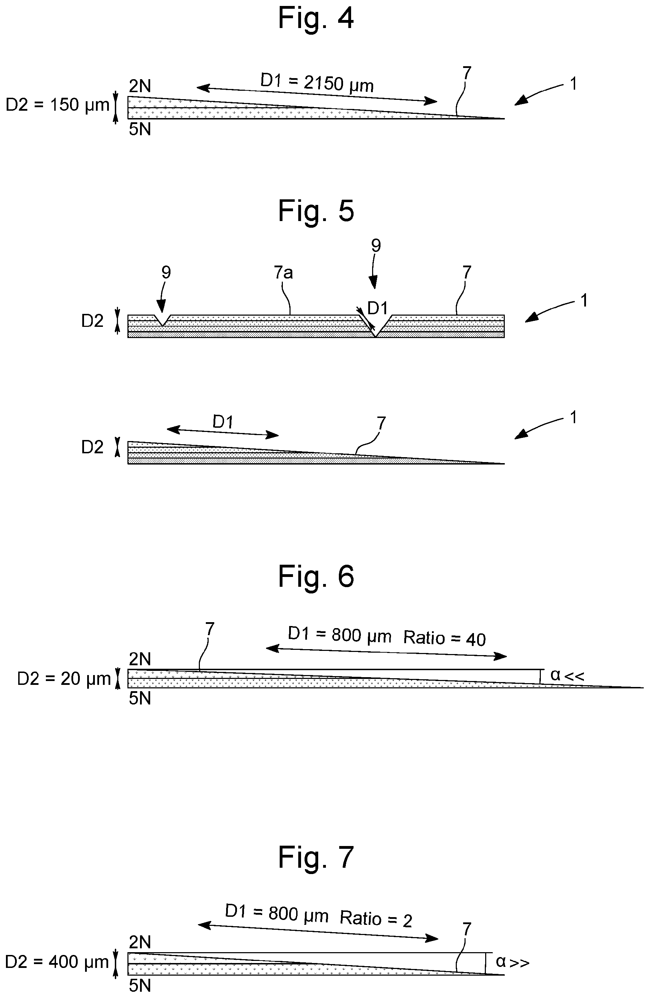

Grâce à l'invention, la zone de diffusion obtenue à l'étape c) qui a typiquement une grandeur de quelques dizaines de microns est étalée sur la face visible 7 ou dans les creusures 9 ménagées sur la face visible 7. Une illustration du principe est la suivante. Deux couches d'alliage Or 2N et 5N ont été soudées par pressage à chaud. Un traitement thermique de diffusion a ensuite été réalisé à 870°C pendant 3 heures. On voit à la figure 3 que la zone de diffusion du Cu et de l'Ag mesurée en ligne par exemple par EDX (Energy Dispersive X-Ray ou Spectroscopie de rayons X à dispersion d'énergie en français) perpendiculairement aux couches est de l'ordre de 150 µm, de 170 µm pour être précis. Ensuite, la face extérieure a été usinée selon un plan incliné ayant un angle α de 4°. Comme schématisé à la figure 4, la zone de diffusion d'une distance D2 de 150 µm entre deux couches est ainsi étalée sur une distance D1 de 2150 µm. A titre comparatif, il faudrait plus de 600 heures de traitement thermique à 870°C pour obtenir la même distance de transition en utilisant uniquement la diffusion.

Selon l'invention, le ratio entre la distance D1 de la zone de diffusion visible sur la face 7 suite à l'étape d) et la distance D2 de la zone de diffusion à la suite de l'étape c) est compris entre 2 et 50, de préférence entre 5 et 20. Sur l'article final, la distance D2 peut être mesurée par exemple sur base d'une mesure EDX à l'intérieur de l'échantillon, c.à.d. sur base d'un essai destructif. L'essai pourrait ne pas être destructif si l'article final comporte une partie où les couches sont exposées (sur un pourtour usiné par exemple). Cette distance D2 est toujours mesurée le long d'une ligne qui est perpendiculaire aux couches. Si les différentes couches ne sont plus aisément dissociables, cette distance D2 correspondra à la plus petite distance de zones de diffusion obtenue sur différentes coupes au travers de l'article. Autrement dit, si les couches ne sont plus aisément dissociables, la distance D2 correspond à la distance entre l'endroit de composition c1 et l'endroit de composition c2, les compositions c1 et c2 étant les compositions nominales des couches initiales. Il en sera de même pour la distance D1. La distance D1 pour le calcul du ratio correspond à la distance de diffusion entre deux couches correspondantes dans le plan incliné de la face 7 ou de la creusure 9, cette mesure étant réalisée en ligne toujours selon une perpendiculaire aux couches (figure 5).

Typiquement, D1 est compris entre 20 µm et 20 mm, de préférence entre 0,5 mm et 5 mm et D2 est compris entre 10 µm et 400 µm, de préférence entre 100 µm et 250 µm.

Le ratio entre D1 et D2 est fonction de l'angle α de la surface inclinée. L'effet de l'angle α et du temps de traitement thermique de diffusion est illustré schématiquement aux figures 6 et 7 pour un empilement de deux couches d'alliage d'Or 2N et 5N. Dans l'exemple de la figure 7, la distance de diffusion D2 est importante avec une valeur de l'ordre de 400 µm suite à un traitement thermique long de plusieurs heures. Ensuite, la face extérieure a été usinée avec un angle α élevé, typiquement supérieur à 20°. On observe un ratio de 2 avec une distance D1 de 800 µm sur la face visible. Au contraire dans l'exemple de la figure 6, le temps de traitement est court, typiquement inférieur à 2 heures menant à une faible distance de diffusion D2 de l'ordre de 20 µm. L'usinage a été réalisé avec un angle α faible inférieur à 1°. On observe alors sur la face visible une même distance D1 de 800 µm, soit un ratio entre D1 et D2 de 40. Chaque approche présente des avantages et des désavantages. L'approche de la figure 7 n'est pas forcément idéale car elle nécessite un traitement thermique de diffusion long. Par contre, un angle d'usinage ouvert est plus pratique en production car il minimise les différences visuelles obtenues avec une variation de profondeur de polissage. L'approche de la figure 6 a pour avantage que le temps de traitement thermique est court, ce qui est économiquement plus intéressant. Par contre, un angle d'usinage très fermé peut être problématique en production car il augmente les différences visuelles obtenues avec une variation de profondeur de polissage. Un compromis est à trouver au cas par cas.

Le procédé a été mis en œuvre pour un article en or massif partant de quatre rondelles d'or superposées avec successivement les nuances d'or suivantes : Or 24K (or pur), Or 18K 2N, Or 18K 4N, Or 18K 6N. Chaque rondelle avait une épaisseur de 0.3 mm et un diamètre de 30 mm. Les rondelles ont été polies au préalable pour améliorer l'interface. Elles ont ensuite été pressées à chaud à 550°C sous 141 MPa de pression pendant 90 minutes pour obtenir l'empilement cohésif. Ensuite, un traitement thermique de l'empilement a été réalisé à 870°C pendant 5 heures sous atmosphère protectrice. L'empilement a été usiné selon un plan incliné avec un angle α de 2° s'étendant au travers des quatre couches. Un très beau rendu esthétique a été obtenu avec une variation graduelle de la couleur du jaune vif de l'or pur au rose de l'or 18K 6N.

## Revendications

1. Procédé de fabrication d'un article (1) présentant sur au moins une partie d'une face (7) destinée à être visible en utilisation et sur une profondeur d'au moins 100 µm en dessous de ladite face (7) un gradient de couleurs (1a, 1b, 1c, 1d), ledit procédé comprenant les étapes successives de :
- Mise à disposition de plusieurs ébauches (2a, 2b, 2c, 2d) réalisées respectivement dans des alliages métalliques se distinguant par leur composition chimique et leur couleur,
- Superposition desdites ébauches (2a, 2b, 2c, 2d) pour former un empilement (2), ledit empilement (2) étant défini avec une face extérieure (10),
le procédé comprenant ensuite les étapes successives ou concomitantes de :
- Mise sous contrainte à température ambiante ou à chaud dudit empilement (2) pour former un empilement cohésif (3) ayant une épaisseur P supérieure ou égale à 100 µm,
- Traitement thermique de diffusion entre les ébauches (2a, 2b, 2c, 2d) dudit empilement cohésif (3),
suivies d'une étape d' :
- Usinage de la face extérieure (10) de l'empilement cohésif (3) pour former au moins une surface inclinée par rapport au plan de la face extérieure (10), la surface inclinée s'étendant sur une profondeur au moins supérieure à l'épaisseur d'une ébauche (2a, 2b, 2c, 2d) par rapport à la face extérieure (10) afin de révéler le gradient de couleurs (1a, 1b, 1c, 1d) sur la face (7),
le procédé comprenant ensuite une étape optionnelle de :
- Finition de l'état de surface de la face (7) pour obtenir l'article (1).

2. Procédé selon la revendication 1, pour lequel les ébauches (2a, 2b, 2c, 2d) sont réalisées en volume dans des alliages d'or distincts avec éventuellement une ébauche (2a, 2b, 2c, 2d) réalisée en volume dans de l'or pur.

3. Procédé selon la revendication précédente, pour lequel, pour l'étape de mise sous contrainte, la température est comprise entre la température ambiante et 890°C, de préférence entre 350°C et 870°C et plus préférentiellement entre 400°C et 650°C avec une pression comprise entre 1 MPa et 1000 MPa, de préférence entre 5 MPa et 350 MPa, plus préférentiellement entre 50 MPa et 250 MPa.

4. Procédé selon la revendication 2 ou 3, pour lequel, pour l'étape de traitement thermique de diffusion, la température est comprise entre 700°C et 890°C avec un temps de traitement compris entre 1 minute et plusieurs dizaines d'heures, de préférence entre 1 heure et 8 heures, plus préférentiellement entre 1 heure et 6 heures.

5. Procédé selon l'une des revendications précédentes, pour lequel l'étape d'usinage est une étape d'usinage sur toute la face extérieure (10) pour obtenir un plan incliné formant la face (7).

6. Procédé selon l'une des revendications précédentes, pour lequel l'étape d'usinage est une étape d'usinage local de la face extérieure (10) pour former au moins une creusure (9) ménagée sur ladite face (7).

7. Procédé selon l'une des revendications précédentes, pour lequel dans l'étape d'usinage, la surface inclinée s'étend sur une profondeur correspond à l'épaisseur P de l'empilement cohésif (3).

8. Procédé selon l'une des revendications précédentes, pour lequel la surface inclinée est plane et inclinée d'un angle α par rapport au plan de la face extérieure (10), l'angle α étant compris entre 0,1° et 40°, de préférence entre 0,5° et 20°, plus préférentiellement entre 1° et 10°.

9. Procédé selon l'une des revendications précédentes, pour lequel l'empilement (2) comporte au moins 3, de préférence au moins 4 ébauches (2a, 2b, 2c, 2d).

10. Procédé selon l'une des revendications précédentes, pour lequel au sein de l'empilement des ébauches (2a, 2b, 2c, 2d), l'ébauche (2d) en position la plus inférieure par rapport à la face extérieure (10) a une épaisseur supérieure aux autres ébauches (2a,2b,2c).

11. Article (1) avec un gradient de couleurs visible sur au moins une partie d'une face (7) de l'article (1) et s'étendant sur une profondeur d'au moins 100 µm en dessous de ladite face (7), ledit gradient de couleurs (1a, 1b, 1c, 1d) étant formé d'un ensemble de couches réalisées respectivement dans des alliages métalliques se distinguant par leurs compositions chimiques et leurs couleurs, l'ensemble des couches présentant une zone de diffusion mesurable notamment par spectroscopie de rayons X à dispersion d'énergie entre chaque couche afin d'obtenir une variation graduelle de la couleur sur l'ensemble des couches.

12. Article (1) selon la revendication précédente, pour lequel le gradient de couleurs (1a, 1b, 1c, 1d) est présent dans le plan de la face (7) et/ou dans au moins une creusure (9) ménagée dans la face (7).

13. Article (1) selon la revendication précédente, pour lequel la zone de diffusion entre deux couches dans le plan et/ou dans la creusure (9) de la face (7) s'étend sur une première distance D1, ladite zone de diffusion entre ces deux mêmes couches s'étendant sur une deuxième distance D2 sur ladite profondeur d'au moins 100 µm en dessous de la face (7) avec un rapport entre D1 et D2 compris entre 2 et 50, les première et deuxième distances D1 et D2 étant mesurées notamment par spectroscopie de rayons X à dispersion d'énergie selon une ligne perpendiculaire aux deux couches.

14. Article (1) selon la revendication 13, pour lequel D1 est compris entre 20 µm et 20 mm, de préférence entre 0,5 mm et 5 mm et pour lequel D2 est compris entre 10 µm et 400 µm, de préférence entre 100 µm et 250 µm.

15. Article (1) selon l'une des revendications 11 à 14, présentant sur toute sa profondeur ledit gradient de couleurs (1a, 1b, 1c, 1d).

16. Article (1) selon l'une des revendications 11 à 15, pour lequel l'ensemble des couches est réalisé avec des déclinaisons d'un des alliages choisis parmi la liste des alliages d'Or/Or-Cu, de Cu/Cu-Sn, de Cu/Cu-Ni, de Cu/Cu-As, de Cu/Cu-Sb et de Cu/Cu-Zn.

17. Article (1) selon la revendication précédente, pour lequel l'ensemble des couches est réalisé avec des déclinaisons d'alliages d'Or/Or-Cu et pour lequel l'ensemble des couches comprend au moins deux couches réalisées avec deux nuances d'or choisies parmi l'Or 24K, l'Or 18K 2N, l'Or 18K 3N, l'Or 18K 4N, l'Or 18K 5N et l'Or 18K 6N.

18. Article (1) selon la revendication précédente, pour lequel l'ensemble des couches comporte quatre couches réalisées avec quatre nuances d'or qui sont successivement l'Or 24K, l'Or 18K 2N, l'Or 18K 4N et l'Or 18K 6N.

19. Article (1) selon l'une des revendications 11 à 18, ledit article (1) étant un cadran, un fond, une masse oscillante, un pont ou une lunette de boîte de montre.

20. Article (1) selon la revendication précédente, pour lequel la couche la plus opposée à la face (7) a une épaisseur supérieure aux autres couches.
